# EUROPEAN PATENT SPECIFICATION

(11) **EP 0 915 994 B1**
(45) Date of publication and mention of the grant of the patent: **21.06.2000**
(21) Application number: 97929050.9
(22) Date of filing: 07.07.1997
(51) Int. Cl.: C22B 7/04, C22B 19/30, C22B 7/02, C22B 1/24, C22B 1/245, C22B 13/02

(54) **"WAELZ" METHOD FOR PROCESSING OF ZINC CONTAINING MATERIALS IN PELLETIZED FORM**
"WAELZ"VERFAHREN ZUR AUFARBEITUNG ZINK ENTHALTENDER ROHSTOFFE ON PELLETIERTER FORM
PROCEDE "WAELZ" DE TRAITEMENT DE MATERIAUX BOULETES CONTENANT DU ZINC

(30) Priority: 30.07.1996 BG 10075496
(43) Date of publication of application: 19.05.1999
(73) Proprietor: KCM - S.A., 4009 Plovdiv (BG)
(72) Inventor: DOBREV, Nikola Ivanov, 4000 Plovdiv (BG); ILIEV, Gueorgui Rangelov, 4000 Plovdiv (BG); BAEV, Tencho Borissov, 4000 Plovdiv (BG)
(74) Representative: Chivarov, Gueorgui, Dr. Dipl.Ing.
(86) International application number: BG9700007
(87) International publication number: WO9804755

(56) References cited:
- EP-A- 0 150 805
- EP-A- 0 508 166
- GB-A- 2 004 854
- US-A- 3 770 416
- DATABASE WPI Section Ch, Week 9512 Derwent Publications Ltd., London, GB; Class M24, AN 95-085775 XP002046744 & JP 07 011 354 A (SUMITOMO METAL MINING CO) , 13 January 1995
- PATENT ABSTRACTS OF JAPAN vol. 005, no. 045 (C-048), 25 March 1981 & JP 56 000236 A (TOSHIN SEIKOU KK;OTHERS: 01), 6 January 1981,
- DATABASE WPI Section Ch, Week 9306 Derwent Publications Ltd., London, GB; Class M25, AN 93-051472 XP002046745 & SU 1 717 656 A (GINTSVETMET RES INST) , 7 March 1992 cited in the application
- DATABASE WPI Section Ch, Week 8235 Derwent Publications Ltd., London, GB; Class M25, AN 82-74110E XP002046746 & SU 876 761 B (UST KAMENOGORSK LEAD-ZIN) , 30 October 1981 cited in the application
- DATABASE WPI Section Ch, Week 7712 Derwent Publications Ltd., London, GB; Class M24, AN 77-20779Y XP002046747 & JP 52 017 321 A (FUNAKI S) , 9 February 1977

## Description

The invention relates to a method for processing of zinc containing materials - semis from metallurgical processes and secondary raw materials, by treatment in a Waelz kiln and is applied in non-ferrous metallurgy.

### BACKGROUND OF THE INVENTION

A Waelz process is known for the treatment of semis from non-ferrous metallurgy. containing zinc, lead and cadmium, which consists of preparation of the charge of zinc containing material, preparation of the charge of carbon containing reducing agent - coke, their feeding into tube rotary kilns at a determined ratio. The materials fed into the kiln are heated to 1200 - 1300°C, wherein, as a result of the reduction that takes place, evapouration and oxidation of the non-ferrous metals like zinc, lead and cadmium are carried out followed by cooling of the obtained metal oxides and their catching in the dust collecting facilities. The zinc low residue - the clinker, is continuously led out from the lower end of the kiln and the metal oxides collected are heated in a multihearth kiln at the temperature of 600-700°C, after which they are sent for leaching (Karoleva V., Metallurgy of Heavy Metals, Part II, Technica, Sofia, 1986).

The disadvantages of the process are:
* high consumption of solid fuel due to the necessity to avoid formation of melt from the charge;
* the presence of dust fractions of coke and raw materials (- 1mm) is a predisposition to mechanical entrainment of the charge, thus worsening the quality of the metal oxides;
* formation of built-ups, impeding the effective utilization of the kilns and shortening the life time of the refractory lining;
* incomplete recovery of the metals from the raw materials;
* entrainment of dusts containing heavy metals with the exhaust gases.

A Waelz process for the recovery of zinc from zinc containing dusts is known, where the flow-sheet includes blending of the zinc containing material with the reducing agent ground in advance - coke, pelletizing of the charge, drying and roasting of the pellets, evapouration of the zinc oxide in tube kilns, followed by cooling of the exhaust gases and catching of the metal oxides in bag filters (Tzvetnie metals No. 3, 1993, pp. 25-26).

The disadvantages of that process are the necessity of drying and roasting of the pelletized charge before its feeding to the tube kilns and the low zinc recovery - 87.3 %.

According to SU 1717656, a charge containing zinc cake, coke breeze and calcium containing material (lime or limestone) is continuously fed into the Waelz kiln, where the process is carried out by blowing in oxygen containing gas in countercurrent. Oxygen consumption per 1 t of charge is 100 - 250 kg, where the 40 - 60 °o of it is blown in at the discharge end of the kiln.

The disadvantages of the method are the need to provide hig quantities of oxygen and a complicated scheme of feeding it at the two ends of the kiln as well as a higher (up to 0.8 % zinc content in the clinker.

According to SU 876 761 there is a method for processing of zinc cake in compliance with which the cake is mixed and pelletized with an activator - calcium containing material (residues from the enrichment of oxidized zinc ores, dolomite, etc.), with the dust fraction of solid carbon containing reducing agent - fraction -3 mm and with return dusts from the Waelz process and drying of the pellets. The pellets so obtained are dried up to the moisture content of 8 to 12% and are separated into fractions by sieving. The pellets of 3-25 mm enter the kiln together with the carbon containing reducing agent (fraction +3 mm) and the Waelz process is carried out at the temperature of 1200°C.

The disadvantages of the method are the low recovery of zinc, the high consumption of reducing agent and the necessity of using kilns for drying the pellets, screens and transportation systems.

A method (BG 23342) is known, according to which the Waelz oxides from the dust collecting facilities are pelletized with water, the quantity of the latter being 8-13 % of the oxides weight, after which the pellets are directly treated in a tube kiln at the temperature of 600-700°C.

### DESCRIPTION OF THE INVENTION

The problem the invention solves is related to a method for treating of zinc containing materials by Waelz process thus achieving reduction of processing costs, complete metals recovery from the feed stocks, turning the waste residue, the clinker, into a commodity good suitable for direct utilization and at the same time avoiding the above disadvantages and lowering the contents of harmful impurities in the exhaust gases.

The method includes preparation of charge of zinc containing materials, powdered carbon containing reducing agent and activator - calcium containing material, blending and pelletizing of the charge, dosing and feeding of the pellets and the rest of the quantities of coarse-grained solid reducing agent in a tube rotary kiln, passing through a Waelz process, discharging of the clinker obtained, cooling and filtering of the kiln gases aiming at catching the metal oxides contained in them. According to the invention mixing and pelletizing of the charge are carried out simultaneously and the obtained pellets with moisture content of 16-18% are directly continuously fed to the tube rotary kiln. The Waelz process is carried out with oxygen enriched air which is fed in countercurrent to the treated material and the filtration of the kiln gases is carried out in two stages where the metal oxides collected in the filters are pelletized to grain size of 2-6 mm and moisture content of 13.5-16%. The pellets obtained from metal oxides are thermally treated in a tube kiln in the presence of oxygen rich air. The clinker discharged from the tube rotary kiln undergoes pelletizing and separation for removing the coke breeze.

The preferred embodiments of the method according to the invention are:

The ratio of the components in the charge to be pelletized is zinc containing material : carbon containing reducing agent : activator - calcium containing material = 8÷12 : 2.5÷7 : 0.8÷1.5, thus providing in the charge Zn and Pb content of 20-25%, ratio Zn/Pb 2.5-4%, content of Sₜₒₜₐₗ up to 6%, content of Cu up to 2%, slag modulus 0.3÷0.6 and content of carbon up to 10%.

The quantity of the powdered carbon containing reducing agent fed during pelletizing of the charge is up to 70% of the total quantity of the reducing agent needed for the Waelz process.

At the stage of pelletizing the zinc containing charge with the powdered reducing agent and the activator, pellets with size of diameter of 1-30 mm, are obtained.

The dosing and feeding of the pelletized material and the solid reducing agent into the tube rotary kiln are carried out automatically by a preset proportion - pelletized charge : solid reducing agent = 3 : 1, and maintaining of that proportion is carried out by varying the quantity of the solid reducing agent in accordance with the quantity of the entering pelletized charge.

The oxygen fed into the tube rotary kiln is 3-12 m³/t of treated charge and the consumption of the oxygen fed into the tube kiln during the thermal treatment of the metal oxides is 5-12 m³/t of oxides.

During the two-stage filtering of the kiln gases the dust loading in the discharged gas flow after the first stage is up to 350 mg/Nm³ and after the second stage - below 10 mg/Nm³.

The kiln gases from the tube kiln undergo cooling and pass through a filtering equipment and the metal oxides collected in it are sent for additional recovery of Zn and Cd and Cl removal, and the metal oxides led out of the discharge end of the tube kiln are sent for hydrometallurgical treatment. The dust loading of the gas flow after filtering the kiln gases from the tube kiln for metal oxides is 4-8 mg/Nm³.

The advantages of the method for processing of zinc containing materials according to the invention are:
* The presence of reducing agent and calcium containing material in the pelletized charge in conjunction with feeding of oxygen rich air while the Waelz process is carried out results on the one hand in lowering of the solid reducing agent consumption and a possibility to use less expensive fine-grained reducing agent, decreasing the formation of built-ups and multiple extension (3-4 times) of the campaign of the refractory lining in the kiln, and on the other hand - to an increase in the chemical activity of the zinc and lead as a result of which the rate of metals recovery from the treated materials to metal oxides is increased.
* The method according to the invention is applicable for processing of various types of zinc containing materials - semies from metallurgy and secondary raw materials: zinc cake, lead slags, built-ups, drosses from the production of electrolytic zinc, cobalt cakes, copper-zinc oxides, oxidized zinc ores, sintered product from the production of zinc based paints. The optimum blending and dosing of the different types of zinc containing materials assure: more reliable mixing of the charge components and avoidance of using a special equipment for mixing (simultaneous mixing and pelletizing is applied); obtaining pellets with the required strength without drying and sieving for separation by fractions. This results in simplifying the flow sheet and energy saving.
* At the two-stage filtering of the kiln gases the dust loading of the gas flow exhausted to the atmosphere is very low (below 8-10 mg/Nm³). That advantage is also connected to environmental protection.
* Utilizing oxygen rich air during the thermal treatment of the metal oxides in the tube kiln intensifies the process, improves the product quality and results in lower consumption of energy and fuel.

### EMBODIMENT OF THE INVENTION

Particularly, the invention can be illustrated by the following example:

The parameters for making the charge for the Waelz process are determined on the grounds of practice as follows:
- Zn and Pb content 20-25%
- Zn/Pb ratio 2.5-4
- Sₜₒₜₐₗ content up to 6%
- Cu content up to 2%
- Slag modulus 0.3-0.6
- C content up to 10%

The above parameters are used for the preparation of the charge having the following content in %:

Zn - 17.51; Pb - 5.14; Sₜₒₜₐₗ - 5.75; Fe - 13.51; CaO - 3.05; MgO - 0.75; SiO₂ - 8.33; Cu - 1.59; C - 9.49; when blending 35 weighted units of zinc containing material (30 units of zinc cake, 4 units of sintered product from zinc based paints production and 1 unit of Cu-Zn oxides) with 10 weighted units of powdered reducing agent and 3 weighted units of activator - calcium containing material which results in the following proportion: Zinc containing charge : reducing agent : activator = 11.7 : 3.3 : 1; at these conditions the charge is characterized by: Zn + Pb 22.65%, Zn/Pb 3.48, slag modulus 0.56.

The so produced charge is fed to a pelletizing drum for mixing and pelletizing.

The obtained pellets, having the diameters of 1-15 mm, and moisture content of 18% and the solid reducing agent are fed by mean of a programmed electronic scales to a Waelz kiln and the ratio pelletized charge : solid reducing agent is 3 : 1 and is regulated byvarying the quantity of the reducing agent fed according to incoming zinc containing charge. The total quantity of solid reducing agent constitutes 28% of the treated material. The materials are treated in the kiln for about 150 minutes at the temperature of 1300°C and oxygen is blown in at the lower end of the kiln in the quantity of 6 m³/t of the charge. The outlet gases, containing Zn, Pb and Cd, are cooled and pass though a two-stage filtering in Jet-type filters. The gases exhausted to the atmosphere contain 8 mg/Nm³ dust and the collected dust have the following content in %: Zn - 55: Pb - 7.0; Sₜₒₜₐₗ - 4.6; Fe - 1.5; Cd - 0.8; Cl - 0.2: C - 1.2; F - 0.02. The clinker is led out from the lower end of the kiln and has the following content in %: Zn - 0.5; Pb - 0.1: Cu - 2.0; and C - 20, undergoes pelletizing with return water and is then sent for separation for removing the coke breeze. The unroasted Waelz oxides are pelletized with water in a cup-pelletizer into pellets of up to 2-6 mm in diameter and moisture content 13.5 %, after which they are sent for oxidizing roasting in a tube kiln. Oxygen in the quantity of 8 m³/t of oxides is blown in the tube kiln. The roasted Waelz oxides, led out of the kiln, have the following content in %: Zn - 59; Pb-18; Sₜₒₜₐₗ - 2.5; Fe³⁺ - 0.03; Cd - 0.2; Cl - 0.1, and are sent for hydrometallurgical treatment, and the kiln gases are cooled, passed through a filtering equipment, and the collected metal oxides undergo an additional Zn and Cd recovery and Cl removal, and the gases exhausted to the atmosphere have dust loading of 6 mg/Nm³. The rate of Zn recovery is 96 %.

## Claims

1. A method for processing of zinc containing materials that includes preparation of a charge of the materials with solid powdered carbon containing reducing agent and activator - calcium containing material, blending and pelletizing of the charge, dosing and feeding of the pellets and the rest of the quantities of coarse-grained solid reducing agent in a tube rotary kiln, passing through a Waelz process, cooling and filtering of the kiln gases, taking out the obtained clinker, characterized by simultaneous blending and pelletizing of the charge, and the obtained pellets with moisture content of 16-18% are directly and continuously fed to the tube rotary kiln, where the Waelz process is carried out with oxygen enriched air which is fed in countercurrent to the treated material and the filtration of the kiln gases is carried out in two stages and the metal oxides collected in the filters are pelletized to grain size of 2-6 mm and moisture content 13.5-16%, after which they undergo thermal treatment in a tube kiln in the presence of oxygen rich air and the clinker discharged from the tube rotary kiln undergoes pelletizing and separation for removing the coke breeze.

2. A method according to Claim 1 where the ratio of the components of the charge to be pelletized is: zinc containing material : powdered carbon containing reducing agent : activator - calcium containing matter = 8÷12 : 2.5÷7 : 0.8÷1.5, thus providing in the charge Zn and Pb content 20-25%, ratio Zn/Pb 2.5-4%, content of Sₜₒₜₐₗ up to 6%, content of Cu up to 2%, slag modulus 0.3÷0.6 and content of carbon up to 10%.

3. A method according to Claims 1 and 2, where the quantity of the powdered carbon containing reducing agent fed during pelletizing of the charge is up to 70% of the total quantity of reducing agent needed for the Waelz process.

4. A method according Claim 1 where the pellets sent to the Waelz process have the size of 1-30 mm in diameter.

5. A method according to Claim 1 where the dosing and feeding of the pelletized material and the solid reducing agent into the tube rotary kiln are carried out automatically by preset proportion - pelletized charge : solid reducing agent = 3 : 1, and maintaining of that proportion is carried out by varying the quantity of the solid reducing agent in accordance with the quantity of the entering pelletized charge.

6. A method according to Claim 1 where the oxygen fed into the tube rotary kiln is 3-12 m³/t of treated charge.

7. A method according to Claim 1 where at the two-stage filtering of the kiln gases the dust loading of the exhaust gas flow after the first stage is up to 350 mg/Nm³ and after the second stage - below 10 mg/nM³.

8. A method according to Claim 1 where during the thermal treatment of the metal oxides the consumption of the oxygen fed is 5-12 m³/t of oxides.

9. A method according to Claim 1 where the roasted metal oxides, led out from the discharge end of the tube kiln undergo hydrometallurgical treatment, and the kiln gases from the tube kiln undergo cooling and pass through a filtering equipment where the metal oxides collected in it are subjected to additional Zn and Cd recovery and Cl removal.

10. A method according to Claims 1 and 9 where the dust loading of the kiln gases after the tube kiln for metal oxides is 4-8 mg/Nm³.

## Patentansprüche

1. Verfahren zur Verarbeitung zinkhaltiger Materialien, mit den Schritten: Vorbereiten einer Charge der Materialien mit einem festem, pulverförmigen Kohlenstoff enthaltenden Reduktionsmittel und einem Aktivator (calciumhaltigen Material), Vermischen und Pelletieren der Charge, Dosieren und Einspeisen der Pellets und der Restmengen an grobkörnigem festem Reduktionsmittel in einen Rohrdrehofen, Hindurchleiten durch einen Wälzprozess, Kühlen und Filtern der Ofengase, Entnehmen der erhaltenen Schlacke
**gekennzeichnet durch**
gleichzeitiges Vermischen und Pelletieren der Charge und direktes und kontinuierliches Zuführen der erhaltenen Pellets mit einem Feuchtigkeitsgehalt von 16 - 18% zu dem Rohrdrehofen, in dem der Wälzprozess mit sauerstoffangereicherter Luft erfolgt, die dem behandelten Material im Gegenstrom zugeführt wird, und dadurch, dass die Filterung der Ofengase in zwei Stufen erfolgt und die in den Filtern gesammelten Metalloxide zu einer Korngröße von 2 - 6 mm und einem Feuchtigkeitsgehalt von 13,5 - 16% pelletiert werden, wonach sie in einem Rohrofen unter dem Vorhandensein von sauerstoffreicher Luft einer thermischen Behandlung unterliegen und die aus dem Rohrdrehofen ausgetragene Schlacke einer Pelletierung und Trennung unterliegt, um den Koksgruß zu entfernen.

2. Verfahren nach Anspruch 1, wobei das Verhältnis der Bestandteile in der zu pelletierenden Charge beträgt: zinkhaltiges Material : pulverförmigen Kohlenstoff enthaltendes Reduktionsmittel: Aktivator (calciumhaltiger Stoff) = 8 ∼ 12 : 2,5 ∼ 7 : 0,8 ∼ 1,5, wodurch in der Charge für einen Zn- und Pb-Gehalt von 20 - 25%, ein Verhältnis Zn/Pb von 2,5 - 4%, einen Gehalt an Sₜₒₜₐₗ von bis zu 6%, einen Gehalt an Cu von bis zu 2%, einen Schlackenmodul von 0,3 ∼ 0,6 und einen Gehalt an Kohlenstoff von bis zu 10% gesorgt ist.

3. Verfahren nach Anspruch 1 und 2, wobei die Menge des pulverförmigen Kohlenstoff enthaltenden Reduktionsmittel, die während der Pelletierung der Charge eingespeist wird, bis zu 70% der Gesamtmenge des für den Wälzprozess benötigten Reduktionsmittels beträgt.

4. Verfahren nach Anspruch 1, wobei die zum Wälzprozess gesandten Pellets eine Größe von 1 - 30 mm im Durchmesser haben.

5. Verfahren nach Anspruch 1, wobei das Dosieren und Einspeisen des pelletierten Materials und des festen Reduktionsmittels in den Rohrdrehofen selbsttätig mit einem voreingestellten Verhältnis (pelletierte Charge : festes Reduktionsmittel = 3 : 1) erfolgt, wobei das Beibehalten dieses Verhältnisses erfolgt, indem die Menge des festen Reduktionsmittels in Übereinstimmung mit der Menge der eintretenden pelletierten Charge geändert wird.

6. Verfahren nach Anspruch 1, wobei die Sauerstoffeinspeisung in den Rohrdrehofen 3 - 12 m³/t behandelter Charge beträgt.

7. Verfahren nach Anspruch 1, wobei der Staubgehalt des Abgabegasstroms bei der zweistufigen Filterung der Ofengase nach der ersten Stufe bis zu 350 mg/Nm³ und nach der zweiten Stufe bis weniger als 10 mg/Nm³ beträgt.

8. Verfahren nach Anspruch 1, wobei der Verbrauch des eingespeisten Sauerstoffs während der thermischen Behandlung der Metalloxide 5 - 12 m³/t Oxide beträgt.

9. Verfahren nach Anspruch 1, wobei die aus dem Austragungsende des Rohrofens abgeführten Metalloxide einer hydrometallurgischen Behandlung unterliegen und die Ofengase aus dem Rohrofen einer Abkühlung unterliegen und durch eine Filterausrüstung hindurchgehen, wobei die darin gesammelten Metalloxide einer zusätzlichen Zn- und Cd-Rückgewinnung und einer Cl-Entfernung unterzogen werden.

10. Verfahren nach Anspruch 1 und 9, wobei der Staubgehalt der Ofengase nach dem Rohrofen für Metalloxide 4 - 8 mg/Nm³ beträgt.

## Revendications

1. Procédé pour traiter des matériaux contenant du zinc qui comporte la préparation d'une charge des matériaux avec un agent réducteur contenant du carbone poudreux et un activateur, un matériau contenant du calcium, le mélange et le pastillage de la charge, le dosage et l'alimentation des pastilles et du reste des quantités d'agent réducteur solide à grains grossiers dans un four rotatif à tube, le passage à travers un processus de Waelz, le refroidissement et le filtrage des gaz de four, l'obtention de la scorie obtenue, caractérisé par le mélange et le pastillage simultanés de la charge, et les pastilles obtenues ayant une teneur en humidité de 16 à 18 % sont alimentées directement et en continu dans le four rotatif à tube, où le processus de Waelz est effectué à l'aide d'air enrichi en oxygène qui est alimenté à contre-courant vers le matériau traité et le filtrage des gaz de four est effectué en deux étapes et les oxydes métalliques recueillis dans les filtres sont transformés en pastilles ayant une dimension de grains de 2 à 6 mm et une teneur en humidité de 13,5 à 16 %, après quoi ils subissent un traitement thermique dans un four à tube en présence d'air riche en oxygène, et la scorie déchargée depuis le four à tube rotatif subit un pastillage et une séparation pour éliminer la braise de coke.

2. Procédé selon la revendication 1, dans lequel le rapport des composants de la charge à transformer en pastilles est le suivant : matériau contenant du zinc : agent réducteur contenant du carbone poudreux : activateur - matière contenant du calcium - = 8 ÷ 12 : 2,5 ÷ 7 : 0,8 ÷ 1,5, en fournissant dans la charge une teneur en Zn et Pb de 20 à 25 %, un rapport Zn/Pb de 2,5 à 4 %, une teneur Sₜₒₜₐₗₑ jusqu'à 6 %, une teneur en Cu jusqu'à 2 %, un module d'encrassage de 0,3 ÷ 0,6 et une teneur en carbone jusqu'à 10 %.

3. Procédé selon les revendications 1 et 2, dans lequel la quantité de l'agent réducteur contenant du carbone poudreux alimenté pendant le pastillage de la charge va jusqu'à 70 % de la quantité totale d'agent réducteur nécessaire pour le processus de Waelz.

4. Procédé selon la revendication 1, dans lequel les pastilles envoyées dans le processus de Waelz ont un diamètre de 1 à 30 mm.

5. Procédé selon la revendication 1, dans lequel le dosage et l'alimentation du matériau transformé en pastilles et de l'agent réducteur solide dans le four rotatif à tube sont effectués automatiquement par une proportion préétablie : charge en pastilles : agent réducteur solide = 3:1, et le maintien de cette proportion est effectué en faisant varier la quantité de l'agent réducteur solide conformément à la quantité de la charge en pastilles entrante.

6. Procédé selon la revendication 1, dans lequel l'oxygène alimenté dans le four rotatif à tube est de 3 à 12 m³/t de charge traitée.

7. Procédé selon la revendication 1, dans lequel, au niveau du filtrage à deux étapes des gaz de four, la charge de poussière de l'écoulement gazeux d'échappement après la première étape va jusqu'à 350 mg/Nm³ et, après la seconde étape, est inférieure à 10 mg/Nm³.

8. Procédé selon la revendication 1, dans lequel, lors du traitement thermique des oxydes métalliques, la consommation en oxygène est de 5 à 12 m³/t d'oxydes.

9. Procédé selon la revendication 1, dans lequel les oxydes métalliques brûlés, évacués depuis l'extrémité de décharge du four à tube subissent un traitement hydrométallurgique, et les gaz de four provenant du four à tube subissent un refroidissement et passent à travers un équipement de filtrage où les oxydes métalliques recueillis dans celui-ci sont soumis à une récupération de Zn et Cd et à une élimination de Cl supplémentaires.

10. Procédé selon les revendications 1 et 9, dans lequel la charge de poussière des gaz de four après le four à tube pour des oxydes métalliques est de 4 à 8 mg/Nm³.
